# EUROPEAN PATENT SPECIFICATION

(11) **EP 2 024 453 B1**
(45) Date of publication and mention of the grant of the patent: **01.08.2012**
(21) Application number: 07750579.0
(22) Date of filing: 14.02.2007
(51) Int. Cl.: C09D 17/00, C09D 7/12, C09D 5/00, C09D 1/00

(54) **COMPOSITIONS AND COATINGS CONTAINING FLUORESCENT, INORGANIC NANOPARTICLES**
ZUSAMMENSETZUNGEN UND BESCHICHTUNGEN MIT ANORGANISCHE FLUORESZENZNANOPARTIKELN
FORMULES ET REVÊTEMENTS CONTENANT DES NANOPARTICULES INORGANIQUES FLUORESCENTES

(30) Priority: 10.05.2006 US 382529
(43) Date of publication of application: 18.02.2009
(73) Proprietor: 3M Innovative Properties Company, St. Paul, MN 55133-3427 (US)
(72) Inventor: BARAN, Jimmie R., Jr.,, Saint Paul, MN 55133-3427 (US)
(74) Representative: Vossius & Partner
(86) International application number: PCT/US2007/003750
(87) International publication number: WO 2007/130190

(56) References cited:
- WO-A1-2006/125736
- US-A- 4 522 958
- US-A- 5 637 258
- US-A- 5 648 407
- US-B1- 6 329 058
- DATABASE CA [Online] CHEMICAL ABSTRACTS SERVICE, COLUMBUS, OHIO, US; 25 February 2009 (2009-02-25), LIM, YONG TAIK ET AL LIM, YONG TAIK ET AL: "Multifunctional silica nanocapsule with a single surface hole", XP002612044, retrieved from STN Database accession no. 2009:226341 & "Multifunctional silica nanocapsule with a single surface hole", SMALL, vol. 5, no. 3, 2009, pages 324-328, XP009141766, ISSN: 1613-6810, DOI: 10.1002/smll.200800935

## Description

### Government Rights

This invention was made with Government support. The Government has certain rights in the invention.

### Technical Field

Compositions and coatings that contain fluorescent, inorganic nanoparticles are described.

### Background

Various fluorescent dye or pigment formulations have been developed for printing a mark such as a security mark on articles such that the security mark is invisible to the unaided human eye but emits a fluorescent signal upon excitation with actinic radiation of a suitable wavelength. The fluorescence signal is often in the visible region of the electromagnetic spectrum upon excitation of the fluorescent dye or pigment in the ultraviolet region of the electromagnetic spectrum. The intensity of the fluorescence signal often diminishes rapidly with time or when exposed to certain environmental conditions.

### Summary of the Invention

Compositions and coatings are described that can be used, for example, to mark a surface. More specifically, the compositions and coatings contain inorganic nanoparticles that are capable of fluorescence.

In one aspect, a dispersion composition is provided that contains a solution and surface-modified, fluorescent, inorganic nanoparticles dispersed in the solution, wherein the fluorescent, inorganic nanoparticles are present in an amount no greater than 5 weight percent based on the weight of the dispersion composition. The solution contains (a) a non-aqueous solvent and (b) a polymeric material, a precursor of the polymeric material, or combinations thereof. The fluorescent, inorganic nanoparticles emit a fluorescence signal at a second wavelength of light when excited by a first wavelength of light that is shorter than the second wavelength of light.

In a second aspect, a method of marking a surface is provided. The method includes preparing a dispersion composition and applying the dispersion composition to a surface to form a coating that is invisible to the unaided human eye. The dispersion composition contains a solution and surface-modified, fluorescent, inorganic nanoparticles dispersed in the solution, wherein the fluorescent, inorganic nanoparticles are present in an amount no greater than 5 weight percent based on the weight of the dispersion composition. The solution contains (a) a non-aqueous solvent and (b) a polymeric material, a precursor of the polymeric material, or combinations thereof. The fluorescent, inorganic nanoparticles emit a fluorescence signal at a second wavelength of actinic radiation when excited by a first wavelength of actinic radiation that is shorter than the second wavelength of actinic radiation. The method further includes exposing the coating to the first wavelength of actinic radiation and measuring a fluorescence intensity at the second wavelength of actinic radiation.

In a third aspect, an article is provided that includes (1) a container equipped to deliver a liquid-containing spray and (2) a dispersion composition within the container. The dispersion composition contains a solution and surface-modified, fluorescent, inorganic nanoparticles dispersed in the solution, wherein the fluorescent, inorganic nanoparticles are present in an amount no greater than 5 weight percent based on the weight of the dispersion composition. The solution contains (a) a non-aqueous solvent and (b) a polymeric material, a precursor of the polymeric material, or combinations thereof. The fluorescent, inorganic nanoparticles emit a fluorescence signal at a second wavelength of light when excited by a first wavelength of light that is shorter than the second wavelength of light.

The above summary of the present invention is not intended to describe each disclosed embodiment or every implementation of the present invention. The Figures, Detailed Description, and Examples that follow more particularly exemplify these embodiments.

### Detailed Description of the Invention

Compositions and coatings are described that contain fluorescent, inorganic nanoparticles that can fluoresce when excited with actinic radiation. The compositions and coatings can be used for marking purposes, particularly for providing a mark that is invisible to the unaided human eye but that can be detected as a fluorescence signal when exposed to a suitable wavelength of actinic radiation.

In one aspect, a dispersion composition is provided that contains a solution and surface-modified, fluorescent, inorganic nanoparticles dispersed in the solution, wherein the fluorescent, inorganic nanoparticles are present in an amount no greater than 5 weight percent based on the weight of the dispersion composition. The solution contains (a) a non-aqueous solvent and (b) a polymeric material, a precursor of the polymeric material, or combinations thereof. The fluorescent, inorganic nanoparticles emit a fluorescence signal at a second wavelength of light when excited by a first wavelength of light that is shorter than the second wavelength of light.

As used herein, the term "dispersion" refers to a composition that contains inorganic nanoparticles suspended or distributed in a solution such that the inorganic nanoparticles do not separate or settle over a useful time period (e.g., 15 minutes, 30 minutes, 1 hour, 2 hours, 6 hours, 12 hours, 18 hours, 24 hours, or longer) without substantial agitation or such that the inorganic nanoparticles can be dispersed again with minimal energy input. As used herein, the term "separate" or "settle" refers to forming a concentration gradient of inorganic nanoparticles within a solution due to gravitational forces.

The term "polymeric material" refers to a material that is a homopolymer, copolymer, terpolymer, or the like. Likewise, the terms "polymerize" or "polymerization" refers to the process of making a homopolymer, copolymer, or the like.

The term "precursor of the polymeric material" refers to the compounds used to form a homopolymer, copolymer, terpolymer, or the like. The precursor of the polymeric material has functional groups that can undergo polymerization reactions. For example, precursor of the polymeric material can include a functional group that can undergo a free radical polymerization reaction (e.g., the functional group can be an ethylenically unsaturated group) or functional groups that can undergo a condensation reaction.

The term "nanoparticles" refers to a particle having an average particle diameter in the range of 0.1 to 1000 nanometers such as in the range of 0.1 to 100 nanometers or in the range of 1 to 100 nanometers. The term "diameter" refers not only to the diameter of substantially spherical particles but also to the longest dimension of non-spherical particles. Suitable techniques for measuring the average particle diameter include, for example, scanning tunneling microscopy, light scattering, and transmission electron microscopy.

As used herein, the term "actinic radiation" refers to radiation in any wavelength range of the electromagnetic spectrum. The actinic radiation is typically in the ultraviolet wavelength range, in the visible wavelength range, in the infrared wavelength range, or combinations thereof. Any suitable energy source known in the art can be used to provide the actinic radiation.

Fluorescent, inorganic nanoparticles that emit a fluorescence signal when suitably excited are included in the dispersion composition. These materials, which are typically either semiconductor materials or metal oxides doped with a rare earth, can fluoresce at a second wavelength of actinic radiation when excited by a first wavelength of actinic radiation that is shorter than the second wavelength. In some embodiments, the fluorescent, inorganic nanoparticles can fluoresce in the visible region of the electromagnetic spectrum when exposed to wavelengths of light in the ultraviolet region of the electromagnetic spectrum. In other embodiments, the fluorescent, inorganic nanoparticles can fluoresce in the infrared region when excited in the ultraviolet or visible regions of the electromagnetic spectrum. In still other embodiments, the fluorescent, inorganic nanoparticles can fluoresce in the ultraviolet region when excited in the ultraviolet region by a shorter wavelength of light, can fluoresce in the visible region when excited by a shorter wavelength of light in the visible region, or can fluoresce in the infrared region when excited by a shorter wavelength of light in the infrared region. The fluorescent, inorganic nanoparticles are often capable of fluorescing in a wavelength range such as, for example, at a wavelength up to 2400 nanometers, up to 2000 nanometers, up to 1600 nanometers, up to 1200 nanometers, up to 1000 nanometers, up to 900 nanometers, up to 800 nanometers, up to 400 nanometers, or up to 250 nanometers. For example, the fluorescent, inorganic nanoparticles are often capable of fluorescence in the range of 1 to 2400 nanometers, in a range of 1 to 2000 nanometers, in the range of 1 to 400 nanometers, in the range of 400 to 2400 nanometers, in the range of 400 to 1600 nanometers, in the range of 400 to 1200 nanometers, in the range of 400 to 1000 nanometers, in the range of 400 to 800 nanometers, in the range of 250 to 2000 nanometers, or in the range of 800 to 2400 nanometers.

The fluorescence wavelength is often dependent on the diameter of the fluorescent, inorganic nanoparticles. In many embodiments, the fluorescent, inorganic nanoparticles have an average diameter that is no greater than 100 nanometers, no greater than 50 nanometers, no greater than 40 nanometers, no greater than 30 nanometers, no greater than 20 nanometers, or no greater than 10 nanometers. The average diameter of the fluorescent, inorganic nanoparticles is typically at least 1 nanometer, at least 2 nanometers, at least 3 nanometers, or at least 4 nanometers. In some embodiments, the average diameter of the fluorescent, inorganic nanoparticles is in a range of 1 to 100 nanometers, in the range of 1 to 50 nanometers, in the range of 1 to 20 nanometers, in the range of 1 to 10 nanometers, or in the range of 2 to 10 nanometers.

Some suitable fluorescent, inorganic nanoparticles capable of emitting a fluorescence signal are semiconductor materials. These fluorescent, inorganic nanoparticles are often referred to as quantum dots and tend to be crystalline (e.g., nanocrystals). Some suitable quantum dots include Group II-VI semiconductor materials such as a metal selenide, a metal telluride, or a metal sulfide. Exemplary metal selenide quantum dots include cadmium selenide, lead selenide, and zinc selenide. Exemplary metal sulfide quantum dots include cadmium sulfide, lead sulfide, and zinc sulfide. Exemplary metal telluride quantum dots include cadmium telluride, lead telluride, and zinc telluride. Other suitable quantum dots include Group III-V semiconductor materials such as gallium arsenide and indium gallium phosphide. Still other suitable quantum dots include Group IV semiconductor materials such as silicon. Exemplary semiconductor materials are commercially available from Evident Technologies (Troy, NY).

Some quantum dots have a core and a shell at least partially surrounding the core. The core often contains a first semiconductor material and the shell often contains a second semiconductor material that is different than the first semiconductor material. For example, a first Group II-VI semiconductor material can be present in the core and a second Group II-VI semiconductor material can be present in the shell. In some such quantum dots, the core is a metal selenide or metal telluride (e.g., cadmium selenide or cadmium telluride) and the shell is metal sulfide (e.g., zinc sulfide or cadmium sulfide). These materials can often have improved stability and are commercially available from Evident Technologies (Troy, NY). Improved stability refers to improved stability to various environmental conditions such as ultraviolet radiation. That is, the intensity of the fluorescence signal diminishes less over time upon repeated exposure to ultraviolet radiation.

The diameter of the quantum dots can affect the fluorescence wavelength. The diameter of the quantum dot is often inversely related to the fluorescence wavelength. For example, cadmium selenide quantum dots having an average particle diameter of about 2 to 3 nanometers tend to fluoresce in the blue or green regions of the visible spectrum while cadmium selenide quantum dots having an average particle diameter of about 8 to 10 nanometers tend to fluoresce in the red region of the visible spectrum.

Other suitable fluorescent, inorganic nanoparticles capable of emitting a fluorescence signal are metal oxides doped with rare earths. Suitable metal oxides include, but are not limited to, zirconium oxide, yttrium oxide, zinc oxide, and copper oxide. Other suitable metal oxides are rare earth oxides such as lanthanum oxide, gadolinium oxide, and praseodymium oxide. Suitable rare earths for doping purpose include, for example, lanthanum, cerium, praseodymium, neodymium, samarium, europium, gadolinium, terbium, dysprosium, holmium, erbium, thulium, and combinations thereof. Preparation of metal oxides doped with rare earths is described, for example, in U.S. Patent No. 5,637,258.

The size of the doped metal oxide, the particular rare earth chosen as the dopant, and the amount of the dopant can affect the fluorescence wavelength. The amount of rare earth is often present in an amount of about 1 to 30 molar percent or about 1 to 20 molar percent based on the total moles of metal oxide and rare earth dopant.

The fluorescent, inorganic nanoparticles that are capable of emitting a fluorescence signal are present in an amount no greater than 5 weight percent based on the weight of the dispersion composition. If the fluorescent, inorganic nanoparticles are present in a larger amount, the fluorescence signal may be unacceptably low because of self-quenching. That is, the emitted radiation can be absorbed by other fluorescent, inorganic nanoparticles resulting in a net decrease in the intensity of the fluorescence signal. In some embodiments, the fluorescent, inorganic nanoparticles are present in an amount no greater than 4 weight percent, no greater than 3 weight percent, no greater than 2 weight percent, or no greater than 1 weight percent. The fluorescent, inorganic nanoparticles are usually present in an amount of at least 0.05 weight percent. If the fluorescent, inorganic nanoparticles are present in a lower level, the fluorescence signal may be unacceptably low because of the low concentration. The fluorescent, inorganic nanoparticles are often present in an amount of at least 0.1 weight percent, at least 0.2 weight percent, at least 0.3 weight percent, at least 0.4 weight percent, or at least 0.5 weight percent. In many applications, the fluorescent, inorganic nanoparticles are present in an amount in the range of 0.05 to 5 weight percent, 0.1 to 4 weight percent, 0.1 to 3 weight percent, 0.1 to 2 weight percent, or 0.1 to 1 weight percent based on the weight of the dispersion composition.

Multiple types of fluorescent, inorganic nanoparticles can be included in the dispersion compositions. Multiple types refer to different compositions of fluorescent, inorganic nanoparticles, different sizes of fluorescent, inorganic nanoparticles, or combinations thereof. The multiple types of fluorescent, inorganic nanoparticles can be selected, for example, to fluoresce at different wavelengths. For example, the multiple types can emit fluorescence signals in different regions of the visible spectrum.

The fluorescent, inorganic nanoparticles are surface-modified with a surface modifying agent to enhance their dispersibility in the solution portion of the dispersion composition. That is, the surface modifying agent tends to increase compatibility of the fluorescent, inorganic nanoparticles with the non-aqueous solvent, the polymeric material, the precursors of the polymeric material, or combinations thereof. Surface modification involves reacting the fluorescent, inorganic nanoparticles with a surface modifying agent or combination of surface modifying agents that attach to the surface of the fluorescent, inorganic nanoparticles and that modify the surface characteristics of the fluorescent, inorganic nanoparticles.

Surface modifying agents are often represented by the formula A-B where the A group is capable of attaching to the surface of the fluorescent, inorganic nanoparticles and the B group is a compatibilizing group. Group A can be attached to the surface by adsorption, formation of an ionic bond, formation of a covalent bond, or a combination thereof. Group B can be reactive or nonreactive and often tends to impart characteristics to the fluorescent, inorganic nanoparticles that are compatible (i.e., miscible) with the solvent. For example, if the solvent is non-polar, group B is typically selected to be non-polar as well. Suitable B groups include linear or branched hydrocarbons that are aromatic, aliphatic, or both aromatic and aliphatic. If the solvent is relatively polar, for example ethyl alcohol, group B is typically selected to be relatively polar as well. Suitable B groups include linear, or branched hydrocarbons that contain oxygen and are aromatic, aliphatic, or both aromatic and aliphatic. The surface modifying agents include, but are not limited to, carboxylic acids or salts thereof, sulfonic acids or salts thereof, phosphoric acids or salts thereof, phosphonic acids or salts thereof, silanes, amines, and alcohols.

Exemplary surface modifying agents include, but are not limited to, carboxylic acids such as octanoic acid, dodecanoic acid, stearic acid, and oleic acid; phosphonic acids such as octylphosphonic acid, laurylphosphonic acid, decylphosphonic acid, dodecylphosphonic acid, and octadecylphosphonic acid; alkylamines such as octylamine, decylamine, dodecylamine, and octadecylamine; and alcohols such as octadecyl alcohol, dodecyl alcohol, lauryl alcohol, furfuryl alcohol, cyclohexanol, phenol, and benzyl alcohol.

Exemplary silanes include, but are not limited to, alkyltrialkoxysilanes such as methyltrimethoxysilane, methyltriethoxysilane, ethyltrimethoxysilane, ethyltriethoxysilane, n-propyltrimethoxysilane, n-propyltriethoxysilane, iso-propyltrimethoxysilane, iso-propyltriethoxysilane, butyltrimethoxysilane, butyltriethoxysilane, hexyltrimethoxysilane, n-octyltrimethoxysilane, n-octyltriethoxysilane, isooctyltrimethoxysilane, dodecyltrimethoxysilane, octadecyltrimethoxysilane, propyltrimethoxysilane, and hexyltrimethoxysilane; methacryloxyalkyltrialkoxysilanes or acryloxyalkyltrialkoxysilanes such as 3-methacryloxypropyltrimethoxysilane, 3-acryloxypropyltrimethoxysilane, 3-methacryloxymethyltriethoxysilane, 3-methyacryloxymethyltrimethoxysilane, and 3-(methacryloxy)propyltriethoxysilane; methacryloxyalkylalkyldialkoxysilanes or acryloxyalkylalkyldialkoxysilanes such as 3-(methacryloxy)propylmethyldimethoxysilane, and 3-(acryloxypropyl)methyldimethoxysilane; methacryloxyalkyldialkylalkoxysilanes or acyrloxyalkyldialkylalkoxysilanes such as 3-(methacryloxy)propyldimethylethoxysilane; mercaptoalkyltrialkoxylsilanes such as 3-mercaptopropyltrimethoxysilane; aryltrialkoxysilanes such as styrylethyltrimethoxysilane, phenyltrimethoxysilane, phenyltriethoxysilane, and p-tolyltriethoxysilane; vinyl silanes such as vinylmethyldiacetoxysilane, vinyldimethylethoxysilane, vinylmethyldiethoxysilane, vinyltrimethoxysilane, vinyltriethoxysilane, vinyltriacetoxysilane, vinyltriisopropoxysilane, vinyltrimethoxysilane, vinyltriphenoxysilane, vinyltri-t-butoxysilane, vinyltris-isobutoxysilane, vinyltriisopropenoxysilane, and vinyltris(2-methoxyethoxy)silane; 3-glycidoxypropyltrialkoxysilane such as glycidoxypropyltrimethoxysilane; and combinations thereof.

Various methods can be used to surface modify the fluorescent, inorganic nanoparticles. In some embodiments, procedures similar to those described in U.S. Patent Nos. 5,648,407 (Goetz et al.), 4,522,958 (Das et al.), or 2,801,185 (Iler et al.) can be used to add the surface modifying agent. For example, the surface modifying agent and the fluorescent, inorganic nanoparticles can be heated at an elevated temperature (e.g., at least 50 °C, at least 60°C, or at least 80 °C) for an extended period of time (e.g., at least 5 hours, at least 10 hours, at least 15, or at least 20 hours).

If desired, any by-product of the surface-modification process or any solvent used in surface-modification process can be removed, for example, by distillation, rotary evaporation, or drying. In some embodiments, the surface-modified fluorescent, inorganic nanoparticles are dried to a powder after surface-modification. In other embodiments, the solvent used for the surface modification is compatible (i.e., miscible) with the polymeric materials and/or precursors of the polymeric material. In these embodiments, at least a portion of the solvent used for the surface-modification reaction can be included in the solution in which the surface-modified, fluorescent, inorganic nanoparticles are dispersed.

The surface modifying agent functions at least in part to reduce the number of aggregated fluorescent, inorganic nanoparticles within the dispersion composition. The formation of aggregated fluorescent, inorganic nanoparticles can alter the fluorescent characteristics of the dispersion composition. As used herein, the term "aggregated" or "aggregation" refers to clusters or clumps or fluorescent, inorganic nanoparticles that are firmly associated with one another. Separation of aggregated particles typically requires high shear. In contrast, "agglomeration" or "agglomerated" refers to a combination or cluster of nanoparticles that is often attributable to the neutralization of electric charges. Agglomeration is typically reversible with moderate shear or by selection of a more compatible solvent.

The surface modifying agent is added in an amount sufficient to minimize aggregation of the fluorescent, inorganic nanoparticles and to form a dispersion composition that remains in the dispersed state for a useful period of time without substantial agitation of the dispersion or that can be easily dispersed again with minimal energy input. Without wishing to be bound by theory, the surface modifying agent is believed to sterically inhibit the aggregation of the fluorescent, inorganic nanoparticles. Preferably, the surface treatment does not interfere with the fluorescence of the inorganic nanoparticles.

The surface-modified, fluorescent, inorganic nanoparticles are dispersed in a solution that contains (a) a non-aqueous solvent and (b) a polymeric material, a precursor of the polymeric material, or combinations thereof. Any polymeric materials that are included in the dispersion composition typically are soluble in the non-aqueous solvent and form a coating that is colorless and transparent when viewed with the human eye. Likewise, any precursors of the polymeric materials that are included in the dispersion composition are soluble in a non-aqueous solvent and form a polymeric coating that is colorless and transparent when viewed with the unaided human eye. The polymeric material typically improves the durability of coatings prepared from the dispersion compositions.

The dispersion composition often includes a polymeric material, a precursor of the polymeric material, or combinations thereof in an amount up to 50 weight percent based on the weight of the dispersion composition. For example, the dispersion composition can include up to 40 weight percent, up to 30 weight percent, up to 20 weight percent, up to 15 weight percent, up to 10 weight percent, or up to 5 weight percent polymeric material, precursor of the polymeric material, or combinations thereof. The dispersion usually contains at least 1 weight percent, at least 2 weight percent, or at least 5 weight percent polymeric material, precursor of the polymeric material, or combinations thereof.

Exemplary polymeric materials include, but are not limited to, polysiloxanes, fluoroelastomers, polyamides, polyimides, caprolactones, caprolactams, polyurethanes, polyvinyl alcohols, polyvinyl chlorides, polyvinyl acetates, polyesters, polycarbonates, polyacrylates, polymethacrylates, polyacrylamides, and polymethacrylamides.

Suitable precursors of the polymeric material (i.e., precursor materials) include any precursor materials used to prepare the polymeric materials listed above. Exemplary precursor materials include acrylates that can be polymerized to polyacrylates, methacrylates that can be polymerized to form polymethacrylates, acrylamides that can be polymerized to form polyacrylamides, methacrylamides that can be polymerized to form polymethacrylamides, epoxy resins and dicarboxylic acids that can be polymerized to form polyesters, diepoxides that can be polymerized to form polyethers, isocyanates and polyols that can be polymerized to form polyurethanes, or polyols and dicarboxylic acids that can be polymerized to form polyesters.

In some embodiments, the dispersion composition contains precursor materials that can form an acrylic pressure-sensitive adhesive upon polymerization. The precursor materials includes one or more alkyl (meth)acrylate monomers. As used herein, the term "(meth)acrylate" refers to both a methacrylate and an acrylate. Suitable alkyl (meth)acrylates include alkyl groups having 1 to 20 carbon atoms such as, for example, isooctyl acrylate, 2-ethylhexyl acrylate, isononyl acrylate, isodecyl acrylate, decyl acrylate, dodecyl acrylate, lauryl acrylate, hexyl acrylate, butyl acrylate, octadecyl acrylate, and combinations thereof. Other co-monomers can be included in the dispersion compositions in amounts up to about 20 weight percent based on the weight of the monomers. Suitable co-monomers include, but are not limited to, acrylic acid, methacrylic acid, itaconic acid, cyclohexyl acrylate, isobornyl acrylate, N-octyl acrylate, acrylarnide, t-butyl acrylate, methyl methacrylate, ethyl methacrylate, propyl methacrylate, N,N-dialkylacrylamides such as N,N-dimethylacrylamide, N-vinyl-2-pyrrolidone, N-vinyl caprolactam, acrylonitrile, tetrahydrofurfuryl acrylate, glycidyl acrylate, 2-phenoxyethyl acrylate, benzyl acrylate, or combinations thereof. The resulting acrylic pressure-sensitive adhesives are often self-tacky and an additional tackifying agent is typically not added.

The dispersion composition can also contain an optional surfactant (i.e., leveling agent). Suitable surfactants include, but are not limited to, silicones and fluorochemical materials. Silicones are available from Lambent Technologies (Gurnee, IL) and Dow Chemicals (Midland, MI). Fluorochemical materials are available from DuPont (Wilmington, DE) and 3M (Saint Paul, MN).

When precursors of the polymeric materials are included in the dispersion compositions, a polymerization initiator is often added. A free radical initiator is typically added when the precursor materials have ethylenically unsaturated groups. The free radical initiator is capable of forming an initiating radical when exposed to thermal energy (i.e., thermal initiator) or actinic radiation (i.e., photoinitiator). The initiator is used in an amount effective for polymerization. The amount is typically in the range of 0.1 to 5 weight percent, 0.1 to 4 weight percent, 0.1 to 3 weight percent, 0.1 to 2 weight percent, or 0.1 to 1 weight percent based on the weight of the monomers in the dispersion composition.

Suitable thermal initiators include, but are not limited to, peroxides such as benzoyl peroxide, dibenzoyl peroxide, cyclohexane peroxide, and methyl ethyl ketone peroxide; hydroperoxides such as butyl hydroperoxide and cumene hydroperoxide; and azo compounds such as 2,2-azo-bis)isobutyronitrile (AIBN). Exemplary thermal initiators are commercially available from DuPont, Wilmington, DE under the trade designation VAZO (e.g., VAZO 64,52,65, and 68), from Elf Atochem North America, Philadelphia, PA under the trade designation LUCIDOL, and from Uniroyal Chemical Co., Middlebury, CT under the trade designation CELOGEN. Suitable photoinitiators include, but are not limited to, benzoin ethers such as benzoin methyl ether and benzoin isopropyl ether, substituted benzoin ethers such as anisoin methyl ether, substituted acetophenones such as 2,2-dimethoxy-2-phenylacetophenone, and substituted alpha-ketones such as 2-methyl-2-hydroxypropiophenone.

The dispersion composition also includes a non-aqueous solvent. As used herein, the term "non-aqueous" means that no water is purposefully added to the compositions. However, a small amount of water might be present as an impurity in other components or might be present as a reaction by-product of a surface modification process or the polymerization process. The dispersion composition typically contains less than 5 weight percent, less than 4 weight percent, less than 3 weight percent, less than 2 weight percent, less than 1 weight percent water, or less than 0.5 weight percent water based on the total weight of solvent.

Coatings prepared from non-aqueous dispersions tend to dry more quickly and have fewer defects (e.g., higher gloss and smoother) compared to coatings from aqueous-based dispersion compositions. Additionally, coatings made from non-aqueous dispersions often tend to be more durable to water washing or soapy water washing compared to aqueous-based dispersion compositions. The coatings desirably can be washed with water or soapy water without removal of the coatings or without removal of the fluorescent, inorganic nanoparticles from the coating.

The non-aqueous solvents are typically selected to be compatible (i.e., miscible) with the surface modifying agent added to the surface of the fluorescent, inorganic nanoparticles. Suitable non-aqueous solvents include, but are not limited to, aromatic hydrocarbons (e.g., toluene, benzene, or xylene), aliphatic hydrocarbons such as alkanes (e.g., cyclohexane, heptane, hexane, or octane), alcohols (e.g., methanol, ethanol, isopropanol, or butanol), ketones (e.g., acetone, methyl ethyl ketone, methyl isobutyl ketone, or cyclohexanone), aldehydes, amines, amides, esters (e.g., amyl acetate, ethylene carbonate, propylene carbonate, or methoxypropyl acetate), glycols (e.g., ethylene glycol, propylene glycol, butylene glycol, triethylene glycol, diethylene glycol, heylene glycol, or glycol ethers such as those commercially available from Dow Chemical, Midland, MI under the trade designation DOWANOL), ethers (e.g., diethyl ether), dimethyl sulfoxide, tetramethylsulfone, halocarbons (e.g., methylene chloride, chloroform, or hydrofluoroethers), or combinations thereof.

The dispersion composition often contains at least 45 weight percent, at least 50 weight percent, at least 60 weight percent, at least 70 weight percent, or at least 80 weight percent non-aqueous solvent based on the weight of the dispersion composition.

Other inorganic nanoparticles that lack fluorescent characteristics (i.e., non-fluorescent, inorganic nanoparticles) can be added to the dispersion composition. Exemplary non-fluorescent, inorganic nanoparticles include, but are not limited to, silica, titania, alumina, zirconia, vanadia, ceria, iron oxide, antimony oxide, tin oxide, alumina/silica, and combinations thereof. These optional non-fluorescent, inorganic nanoparticles can be added to impart or improve other characteristics to the coating or composition. For example, these non-fluorescent, inorganic nanoparticles can be added to increase the hardness of the coatings, to increase the refractive index of the compositions or coatings, or to alter the smoothness and/or the gloss of the coatings.

In some embodiments, the non-fluorescent, inorganic nanoparticles are silica nanoparticles. Silica nanoparticles without a surface modifying agent are commercially available, for example, from Nalco Chemical Co., Naperville, IL under the trade designation NALCO (e.g., NALCO 1040, 1050, 1060, 2326, 2327, or 2329). In other embodiments, the non-fluorescent, inorganic nanoparticles are zirconia as described in U.S. Patent No. 6,376,590 B2 (Kolb et al.). In still other embodiments, the non-fluorescent, inorganic nanoparticles are titania as described in U.S. Patent No. 6,329,058 B1 (Amey et al.).

Exemplary dispersion compositions include fluorescent, inorganic nanoparticles in an amount of up to 5 weight percent, the polymeric material and/or precursor of the polymeric material in an amount up to 50 weight percent, and the non-aqueous solvent in an amount of at least 45 weight percent based on the weight of the dispersion composition. More specifically, the dispersion compositions often contain 0.1 to 5 weight percent fluorescent, inorganic nanoparticles, 1 to 50 weight percent polymeric material and/or precursor of the polymeric material, and at least 45 weight percent non-aqueous solvent. For example, the dispersion composition can contain 0.1 to 2 weight percent fluorescent, inorganic nanoparticles, 1 to 20 weight percent polymeric material and/or precursor of the polymeric material, and at least 78 weight percent non-aqueous solvent.

A propellant can be added to the dispersion composition. Suitable propellants include, but are not limited to, chlorofluorocarbons (CFCs) such as trichlorofluoromethane (also referred to propellant 11), dichlorodifluoromethane (also referred to as propellant 12), or 1,2-dichloro-1,1,2,2-tetrafluoroethane (also referred to as propellant 114); a hydrochlorofluorocarbon; a hydrofluorocarbon (HFC) such as 1,1,1,2-tetrafluoroethane (also referred to as propellant 134a) or 1,1,1,2,3,3,3-heptafluoropropane (also referred to as propellant 227); carbon dioxide; an alkane such as propane or butane; or combinations thereof. The amount of propellant is often in the range of 50 to 99 weight percent or in the range of 50 to 90 weight percent based on the total weight of the propellant and dispersion composition.

In a second aspect, a method of marking a surface is provided. The method includes preparing a dispersion composition and applying the dispersion composition to a surface to form a coating that is invisible to the unaided human eye. The dispersion composition contains a solution and surface-modified, fluorescent, inorganic nanoparticles dispersed in the solution, wherein the fluorescent, inorganic nanoparticles are present in an amount no greater than 5 weight percent based on the weight of the dispersion composition. The solution contains (a) a non-aqueous solvent and (b) a polymeric material, a precursor of the polymeric material, or combinations thereof. The fluorescent, inorganic nanoparticles emit a fluoresce signal at a second wavelength of actinic radiation when excited by a first wavelength of actinic radiation that is shorter than the second wavelength of actinic radiation. The method further includes exposing the coating to the first wavelength of actinic radiation and measuring a fluorescence intensity at the second wavelength of actinic radiation.

The dispersion composition, which is the same as described above, can be applied to a surface using any method known in the art. The coating that is applied to the surface can be continuous or discontinuous. Suitable application methods include, but are not limited to, spray coating, dip coating, inkjet printing, screen printing, gravure coating, knife coating, die coating, and curtain coating. Exemplary surfaces for application of the dispersion coating include, but are not limited to, skin, fur, paper, glass, ceramic materials, wood, polymeric films, metal, fabric, rubber, plastics, cardboard, and the like. The surfaces such as wood or metal can be stained, painted, varnished, or the like.

In some embodiments, the dispersion composition includes precursors of the polymeric material. Although these precursor materials can be polymerized either before or after application of the dispersion composition to a surface, polymerization often occurs after the coating step. Any suitable method of polymerization can be used. For example, precursor materials that are ethylenically unsaturated can be polymerized using actinic radiation in the presence of a photoinitiator or using thermal energy in the presence of a thermal initiator.

In many embodiments, the dispersion composition contains polymeric material that is not polymerizable. That is, the polymeric material is already polymerized and does not undergo further polymerization or curing after application to a surface. A dispersion composition that contains polymerized polymeric material is well suited for some application methods because of the higher viscosity typically associated with these materials. That is, if the dispersion contains precursors for polymeric materials rather than polymeric materials, a viscosifier may be needed to increase the viscosity of the dispersion composition.

In some applications, at least some of the non-aqueous solvent in the coating can be removed by evaporation. In other applications, the coating is heated in an oven to facilitate the removal of solvent. For example, the coating can be heated to a temperature up to 80°C, up to 100°C, up to 120 °C, or up to 150°C.

The coating is typically invisible to the unaided human eye, at least prior to excitation with a suitable wavelength of actinic radiation. Upon excitation with a suitable wavelength of actinic radiation, at least some of the fluorescent, inorganic nanoparticles in the coating fluoresce at a longer wavelength of actinic radiation than is needed for excitation. In some embodiments, the fluorescence signal is in the visible region of the electromagnetic spectrum and can be detected by the human eye. In other embodiments, the fluorescence signal is outside the visible region such as in the ultraviolet or infrared regions of the electromagnetic spectrum and can be detected using a detector suitable for that wavelength such as an ultraviolet or infrared detector.

Excitation and fluorescence outside the visible region can be advantageously used to mark an article when the appearance of the mark would detract from the article. That is, at least in some embodiments, the marking can be invisible to the unaided, human eye both before and during excitation with a suitable source of actinic radiation.

The intensity of the fluorescence signal can often be altered by varying the concentration of the fluorescent, inorganic nanoparticles within the dispersion composition. The wavelength of the fluorescence signal can often be altered by varying the size or composition of the fluorescent, inorganic nanoparticles included in the dispersion composition.

In some applications, the coating is discontinuous and is applied using a printing process such as inkjet printing or screen printing processes. A discontinuous coating can, for example, provide information for identification or verification purposes. The information can be in the form of a date, barcode, mark, or other recognizable pattern.

Multiple dispersion compositions can be applied to a surface. For example, a first dispersion composition can be applied to a first region of a surface that contains fluorescent, inorganic nanoparticles that fluoresce in one wavelength range and a second dispersion composition can be applied to a second region of the surface that contains fluorescent, inorganic nanoparticles that fluoresce in a different wavelength range. These multiple dispersions can be applied, for example, using a printing process such as an inkjet printing or screen printing. In an alternative example, multiple dispersions can be applied to the same region of the surface.

In other applications, the coating is applied in the form of a spray. A spray application method can be particularly desirable when the object to be marked is large, when the object to be marked cannot be easily relocated, or when a portable application process is needed. Any suitable device known in the art for providing a spray can be used. For example, a spray nozzle can be positioned in the dispersion composition and the dispersion can be pumped through the spray nozzle. Alternatively, the dispersion composition containing a propellant can be placed in an aerosol container. Suitable dispersion compositions for spray application often contain polymeric material rather than precursors of the polymeric material.

The coatings that contain fluorescent, inorganic nanoparticles typically provide a fluorescence signal that is longer lasting compared to a fluorescence signal from a coating that contains a fluorescent dye or pigment. The fluorescence signal often has a higher intensity because of the higher quantum yields of the fluorescent, inorganic nanoparticles compared to fluorescent dyes or pigments. Additionally, the fluorescence signal from coatings that contain fluorescent, inorganic nanoparticles tend to have a narrower wavelength range compared to the fluorescence signal from a coating that contains a fluorescent dye or pigment. A detector specific for the narrow wavelength can be used to detect the fluorescence signal.

In a third aspect, an article is provided that includes (1) a container equipped to deliver a liquid-containing spray and (2) a dispersion composition within the container. The dispersion composition contains a solution and surface-modified, fluorescent, inorganic nanoparticles dispersed in the solution, wherein the fluorescent, inorganic nanoparticles are present in an amount no greater than 5 weight percent based on the weight of the dispersion composition. The solution contains (a) a non-aqueous solvent and (b) a polymeric material, a precursor of the polymeric material, or combinations thereof. The fluorescent, inorganic nanoparticles emit a fluorescence signal at a second wavelength of light when excited by a first wavelength of light that is shorter than the second wavelength of light.

In some embodiments, the container is an aerosol can and the dispersion composition contains a propellant. The propellant, which is described above, is often present in an amount of 50 to 99 weight percent or in an amount of 50 to 90 weight percent based on the weight of the combined weight of the dispersion composition and the propellant.

In other embodiments, the container has a spray nozzle. The spray nozzle can be connected to a pump to draw the dispersion composition through the spray nozzle. For example, the spray nozzle can be connected to a hand pump, mechanical pump, or syringe pump. Alternatively, the container can be pressurized to force liquid through the spray nozzle.

The following examples are provided to further illustrate the present invention and are intended to limit the invention in any manner.

### Examples

Unless otherwise noted, all reagents and solvents were obtained from Aldrich Chemical Company, Milwaukee, Wisconsin.

Toluene was obtained from EMD Chemical, Gibbstown, New York.

Poly (methyl methacrylate) (PMMA) with an average Mw of about 120, 000 g/mole was obtained from Aldrich Chemical Company of Milwaukee, Wisconsin.

The quantum dots were obtained from Evident Technologies of Troy, New York., in toluene with or without polymethyl methacrylate depending on the specific sample used and they were used as supplied.

All percents and amounts reported are by weight unless otherwise specified.

A hand held UV light (Model ENF-260C from Spectroline ® of Westbury, New York) was used as the excitation source.

Spraying tests were carried out using a Preval® sprayer apparatus available from Precision Valve Corporation of Yonkers, New York.

### Preparatory Example 1: Preparation of isooctyltrimethoxysilane modified silica nanoparticles

The isooctyltrimethoxysilane modified silica nanoparticles were prepared as described in patent US 6,586,483 using the following procedure. Isooctyltrimethoxysilane (BS1316, Wacker Silicones Corp., Adrian, Michigan; 61.4 grams), 1-methoxy-2-propanol (1940 grams), and NALCO 2326 colloidal silica (1000 grams) were combined in a 1 gallon glass jar. The mixture was shaken for to ensure mixing and then placed in an oven at 80°C overnight. The mixture was then dried in an oven at 150°C to produce a white particulate solid.

### Example 1

A solution of PMMA (10%) in toluene was made by mixing the components for 1 hour at room temperature. A portion of this solution (9 grams) was combined with a portion (1 gram) of CdSe/ZnS core-shell EVIDOTS in toluene solution containing polymethyl methacrylate (part no. ED-C11-R40-0540 from Evident Technologies). This sample was then sprayed onto a glass slide and dried. When the resulting coating was exposed to UV light (365nm) in the dark, the coating was visible.

### Example 2

A solution of PMMA (10%) in toluene was made by mixing the components for 1 hour at room temperature. A portion of this solution (9 grams) was combined with a portion (1 gram) of CdSe/ZnS core-shell EVIDOTS in toluene (part no. ED-C11-TOL-0620 from Evident Technologies). This sample was then sprayed onto a glass slide and dried. When the resulting coating was exposed to UV light (365nm) in the dark, the coating was visible.

### Example 3

A solution of PMMA (10%) in toluene was made by mixing the components for 1 hour at room temperature. A portion of this solution (9 grams) was combined with a portion (1 gram) of CdSe/ZnS core-shell EVIDOTS in toluene (part no. ED-C11-TOL-0490 from Evident Technologies). This sample was then sprayed onto a glass slide and dried. When the resulting coating was exposed to UV light (365nm) in the dark, the coating was visible.

### Example 4

A solution of PMMA (10%) in toluene was made by mixing the components for 1 hour at room temperature. A portion of this solution (9 grams) was combined with a portion (1 gram) of CdSe/ZnS core-shell EVIDOTS in toluene solution containing polymethyl methacrylate (part no. ED-C11-R40-0540 from Evident Technologies). This dispersion was sprayed onto other surfaces such as coupons of 304 Stainless Steel, Fruehauf painted aluminum, Alodyne aluminum, E&D aluminum, acrylic and polycarbonate. None of the coatings were detectable in white light, but were visible under 365nm UV light in the dark.

### Example 5

A solution of PMMA (10%) in toluene was made by mixing the components for 1 hour at room temperature. A portion of this solution (17 g) was combined with a portion (2 grams) of CdSe/ZnS core-shell EVIDOTS in toluene solution containing polymethyl methacrylate (part no. ED-C11-R40-0540 from Evident Technologies) and a dispersion (1 gram) of isooctyltrimethoxysilane modified silica nanoparticles (5% in toluene). The silica particles had an average diameter of 5 nanometers. This mixture was stirred together overnight with a magnetic stirbar. This sample was then sprayed onto a glass slide and dried. The resulting coating was without any surface defects and was not detectable in white light, but it was visible when exposed to UV light (365nm) in the dark.

### Example 6

A solution of PMMA (10%) in toluene was made by mixing the components for 1 hour at room temperature. A portion of this solution (17 g) was combined with a portion (2 grams) of CdSe/ZnS core-shell EVIDOTS in toluene solution containing polymethyl methacrylate (part no. ED-C11-TOL-0620) and a (1 gram) of isooctyltrimethoxysilane modified silica nanoparticles (5% in toluene). The silica particles had an average diameter of 5 nanometers. This mixture was stirred together overnight with a magnetic stirbar. This sample was then sprayed onto a glass slide and dried. The resulting coating was without any surface defects and was not detectable in white light, but it was visible when exposed to UV light (365nm) in the dark.

## Claims

1. A dispersion composition comprising
a solution comprising (a) a non-aqueous solvent and (b) a polymeric material, a precursor of the polymeric material, or combinations thereof; and
surface-modified, fluorescent, inorganic nanoparticles dispersed in the solution, wherein the fluorescent, inorganic nanoparticles comprise a semiconductor material or a metal oxide doped with a rare earth, and wherein the fluorescent, inorganic nanoparticles are present in an amount no greater than 5 weight percent based on the weight of the dispersion composition and wherein the fluorescent, inorganic nanoparticles emit a fluorescence signal at a second wavelength of actinic radiation when excited by a first wavelength of actinic radiation that is shorter than the second wavelength of actinic radiation.

2. The dispersion composition of claim 1, wherein the fluorescent, inorganic nanoparticles have an average diameter less than 50 nanometers.

3. The dispersion composition of claim 1, wherein the fluorescent, inorganic nanoparticles comprise a metal sulfide, metal selenide, or metal telluride or a metal oxide doped with a rare earth.

4. The dispersion composition of claim 1, wherein the fluorescent, inorganic nanoparticles comprise metal sulfide, metal selenide, or metal telluride.

5. The dispersion composition of claim 1, therein the precursor of the polymeric material forms an acrylic pressure-sensitive adhesive upon polymerization.

6. The dispersion composition of claim 1, wherein the fluorescent, inorganic nanoparticles comprise fluorescent, inorganic nanoparticles of a first type and fluorescent, inorganic nanoparticles of a second type wherein the first type and the second type have a different average size, different composition, or combination thereof.

7. The dispersion composition of claim 1, further comprising non-fluorescent, inorganic nanoparticles.

8. A method of marking, the method comprising:
forming a dispersion composition comprising
a solution comprising (a) a non-aqueous solvent and (b) a polymeric material, a precursor of the polymeric material, or combinations thereof; and
surface-modified, fluorescent, inorganic nanoparticles dispersed in the solution, wherein the fluorescent, inorganic nanoparticles comprise a semiconductor material or a metal oxide doped with a rare earth, and wherein the fluorescent, inorganic nanoparticles are present in an amount no greater than 5 weight percent based on the weight of the dispersion composition and wherein the fluorescent, inorganic nanoparticles emit a fluorescence signal at a second wavelength of actinic radiation when excited by a first wavelength of actinic radiation that is shorter than the second wavelength of actinic radiation; and
applying the dispersion composition to a surface to form a coating that is invisible to the unaided human eye;
exposing the coating to actinic radiation of the first wavelength, wherein the fluorescent, inorganic nanoparticles are excited at the first wavelength and emit a fluorescence signal at the second wavelength that is greater than the first wavelength;
measuring the fluorescence signal at the second wavelength.

9. The method of claim 8, wherein applying the dispersion composition comprises spraying the dispersion.

10. The method of claim 8, wherein the coating is discontinuous.

11. The method of claim 8, wherein the coating is invisible to the unaided, human eye after exposing the coating to actinic radiation.

12. The method of claim 8, wherein measuring the second wavelength is in the visible region of the electromagnetic spectrum.

13. The method of claim 8, wherein the fluorescent, inorganic nanoparticles comprise a metal sulfide, metal selenide, or metal telluride or a metal oxide doped with a rare earth.

14. The method of claim 8, wherein the fluorescent, inorganic nanoparticles comprises a metal sulfide, metal selenide, or metal telluride.

15. An article comprising:
a container equipped to deliver a liquid-containing spray;
a dispersion composition within the container, the dispersion composition comprising
a solution comprising (a) a non-aqueous solvent and (b) a polymeric material, a precursor of the polymeric material, or combinations thereof; and
surface-modified, fluorescent, inorganic nanoparticles dispersed in the solution, wherein the fluorescent, inorganic nanoparticles comprise a semiconductor material or a metal oxide doped with a rare earth, and wherein the fluorescent, inorganic nanoparticles are present in an amount no greater than 5 weight percent based on the weight of the composition and wherein the fluorescent, inorganic nanoparticles have an average particle size no greater than 50 nanometers and undergo fluorescence at a second wavelength when exposed to a first wavelength that is shorter than the second wavelength.

## Patentansprüche

1. Dispersionszusammensetzung, umfassend
eine Lösung, umfassend (a) ein nichtwässriges Lösungsmittel und (b) ein Polymermaterial, einen Vorläufer des Polymermaterials oder Kombinationen davon; und
oberflächenmodifizierte, fluoreszierende, anorganische Nanopartikel, die in der Lösung dispergiert sind, wobei die fluoreszierenden, anorganischen Nanopartikel ein Halbleitermaterial oder ein Metalloxid dotiert mit einer seltenen Erde umfassen, und wobei die fluoreszierenden, anorganischen Nanopartikel in einer Menge von nicht mehr als 5 Gewichtsprozent basierend auf dem Gewicht der Dispersionszusammensetzung vorhanden sind und wobei die fluoreszierenden, anorganischen Nanopartikel ein Fluoreszenzsignal bei einer zweiten Wellenlänge aktinischer Strahlung emittieren, wenn sie von einer ersten Wellenlänge aktinischer Strahlung erregt werden, die kürzer ist als die zweite Wellenlänge aktinischer Strahlung.

2. Dispersionszusammensetzung nach Anspruch 1, wobei die fluoreszierenden, anorganischen Nanopartikel einen durchschnittlichen Durchmesser von weniger als 50 Nanometer aufweisen.

3. Dispersionszusammensetzung nach Anspruch 1, wobei die fluoreszierenden, anorganischen Nanopartikel ein Metallsulfid, Metallselenid oder Metalltellurid oder ein Metalloxid dotiert mit einer seltenen Erde umfassen.

4. Dispersionszusammensetzung nach Anspruch 1, wobei die fluoreszierenden, anorganischen Nanopartikel Metallsulfid, Metallselenid oder Metalltellurid umfassen.

5. Dispersionszusammensetzung nach Anspruch 1, wobei der Vorläufer des Polymermaterials nach der Polymerisation einen Acryl-Haftklebstoff bildet.

6. Dispersionszusammensetzung nach Anspruch 1, wobei die fluoreszierenden, anorganischen Nanopartikel fluoreszierende, anorganische Nanopartikel eines ersten Typs und fluoreszierende, anorganische Nanopartikel eines zweiten Typs umfassen, wobei der erste Typ und der zweite Typ eine unterschiedliche durchschnittliche Größe, unterschiedliche Zusammensetzung oder Kombination davon aufweisen.

7. Dispersionszusammensetzung nach Anspruch 1, ferner umfassend nicht fluoreszierende, anorganische Nanopartikel.

8. Markierungsverfahren, wobei das Verfahren Folgendes umfasst:
Bilden einer Dispersionszusammensetzung, umfassend
eine Lösung, umfassend (a) ein nichtwässriges Lösungsmittel und (b) ein Polymermaterial, einen Vorläufer des Polymermaterials oder Kombinationen davon; und
oberflächenmodifizierte, fluoreszierende, anorganische Nanopartikel, die in der Lösung dispergiert sind, wobei die fluoreszierenden, anorganischen Nanopartikel ein Halbleitermaterial oder ein Metalloxid dotiert mit einer seltenen Erde umfassen, und wobei die fluoreszierenden, anorganischen Nanopartikel in einer Menge von nicht mehr als 5 Gewichtsprozent basierend auf dem Gewicht der Dispersionszusammensetzung vorhanden sind und wobei die fluoreszierenden, anorganischen Nanopartikel ein Fluoreszenzsignal bei einer zweiten Wellenlänge aktinischer Strahlung emittieren, wenn sie von einer ersten Wellenlänge aktinischer Strahlung erregt werden, die kürzer ist als die zweite Wellenlänge aktinischer Strahlung;
Applizieren der Dispersionszusammensetzung auf eine Oberfläche zur Bildung einer Beschichtung, die für das bloße menschliche Auge unsichtbar ist;
Exponieren der Beschichtung einer aktinischen Strahlung der ersten Wellenlänge, wobei die fluoreszierenden, anorganischen Nanopartikel bei der ersten Wellenlänge erregt werden und bei der zweiten Wellenlänge, die größer als die erste Wellenlänge ist, ein Fluoreszenzsignal emittieren; und
Messen des Fluoreszenzsignals bei der zweiten Wellenlänge.

9. Verfahren nach Anspruch 8, wobei das Applizieren der Dispersionszusammensetzung das Aufsprühen der Dispersion umfasst.

10. Verfahren nach Anspruch 8, wobei die Beschichtung diskontinuierlich ist.

11. Verfahren nach Anspruch 8, wobei die Beschichtung nach dem Exponieren der Beschichtung aktinischer Strahlung für das bloße menschliche Auge unsichtbar ist.

12. Verfahren nach Anspruch 8, wobei das Messen der zweiten Wellenlänge im sichtbaren Bereich des elektromagnetischen Spektrums erfolgt.

13. Verfahren nach Anspruch 8, wobei die fluoreszierenden, anorganischen Nanopartikel ein Metallsulfid, Metallselenid oder Metalltellurid oder ein Metalloxid dotiert mit einer seltenen Erde umfassen.

14. Verfahren nach Anspruch 8, wobei die fluoreszierenden, anorganischen Nanopartikel Metallsulfid, Metallselenid oder Metalltellurid umfassen.

15. Gegenstand, umfassend:
einen Behälter, der zur Abgabe eines flüssigkeitshaltigen Sprays ausgestattet ist;
eine Dispersionszusammensetzung in dem Behälter, wobei die Dispersionszusammensetzung Folgendes umfasst
eine Lösung, umfassend (a) ein nichtwässriges Lösungsmittel und (b) ein Polymermaterial, einen Vorläufer des Polymermaterials oder Kombinationen davon; und
oberflächenmodifizierte, fluoreszierende, anorganische Nanopartikel, die in der Lösung dispergiert sind, wobei die fluoreszierenden, anorganischen Nanopartikel ein Halbleitermaterial oder ein Metalloxid dotiert mit einer seltenen Erde umfassen, und wobei die fluoreszierenden, anorganischen Nanopartikel in einer Menge von nicht mehr als 5 Gewichtsprozent basierend auf dem Gewicht der Zusammensetzung vorhanden sind und wobei die fluoreszierenden, anorganischen Nanopartikel eine durchschnittliche Teilchengröße von nicht mehr als 50 Nanometern aufweisen und Fluoreszenz bei einer zweiten Wellenlänge zeigen, wenn sie bei einer ersten Wellenlänge exponiert werden, die kürzer ist als die zweite Wellenlänge.

## Revendications

1. Composition sous forme de dispersion comprenant
une solution comprenant (a) un solvant non aqueux et (b) un matériau polymère, un précurseur du matériau polymère, ou des combinaisons de ceux-ci ; et
des nanoparticules inorganiques fluorescentes, modifiées en surface, dispersées dans la solution, les nanoparticules inorganiques fluorescentes comprenant un matériau semi-conducteur ou un oxyde métallique dopé avec une terre rare, les nanoparticules inorganiques fluorescentes étant présentes dans une quantité ne dépassant pas 5 % en poids relativement au poids de la composition sous forme de dispersion et les nanoparticules inorganiques fluorescentes émettant un signal de fluorescence à une deuxième longueur d'onde de rayonnement actinique quand elles sont excitées par une première longueur d'onde de rayonnement actinique qui est plus courte que la deuxième longueur d'onde de rayonnement actinique.

2. Composition sous forme de dispersion selon la revendication 1, dans laquelle les nanoparticules inorganiques fluorescentes ont un diamètre moyen inférieur à 50 nanomètres.

3. Composition sous forme de dispersion selon la revendication 1, dans laquelle les nanoparticules inorganiques fluorescentes comprennent un sulfure métallique, un séléniure métallique, ou un tellurure métallique ou un oxyde métallique dopé avec une terre rare.

4. Composition sous forme de dispersion selon la revendication 1, dans laquelle les nanoparticules inorganiques fluorescentes comprennent un sulfure métallique, un séléniure métallique, ou un tellurure métallique.

5. Composition sous forme de dispersion selon la revendication 1, dans laquelle le précurseur du matériau polymère forme un adhésif acrylique sensible à la pression quand il est polymérisé.

6. Composition sous forme de dispersion selon la revendication 1, dans laquelle les nanoparticules inorganiques fluorescentes comprennent des nanoparticules inorganiques fluorescentes d'un premier type et des nanoparticules inorganiques fluorescentes d'un deuxième type, le premier type et le deuxième type ayant différentes tailles moyennes, différentes compositions, ou une combinaison de celles-ci.

7. Composition sous forme de dispersion selon la revendication 1, comprenant en outre des nanoparticules inorganiques non fluorescentes.

8. Procédé de marquage, le procédé consistant à :
former une composition sous forme de dispersion comprenant
une solution comprenant (a) un solvant non aqueux et (b) un matériau polymère, un précurseur du matériau polymère, ou des combinaisons de ceux-ci ; et
des nanoparticules inorganiques fluorescentes, modifiées en surface, dispersées dans la solution, les nanoparticules inorganiques fluorescentes comprenant un matériau semi-conducteur ou un oxyde métallique dopé avec une terre rare, les nanoparticules inorganiques fluorescentes étant présentes dans une quantité ne dépassant pas 5 % en poids relativement au poids de la composition sous forme de dispersion et les nanoparticules inorganiques fluorescentes émettant un signal de fluorescence à une deuxième longueur d'onde de rayonnement actinique quand elles sont excitées par une première longueur d'onde de rayonnement actinique qui est plus courte que la deuxième longueur d'onde de rayonnement actinique ;
appliquer la composition sous forme de dispersion sur une surface pour former un revêtement qui est invisible à l'oeil nu ;
exposer le revêtement à un rayonnement actinique de la première longueur d'onde, les nanoparticules inorganiques fluorescentes étant excitées à la première longueur d'onde et émettant un signal de fluorescence à la deuxième longueur d'onde qui est supérieure à la première longueur d' onde ; et
mesurer le signal de fluorescence à la deuxième longueur d'onde.

9. Procédé selon la revendication 8, dans lequel l'application de la composition sous forme de dispersion comprend la pulvérisation de la dispersion.

10. Procédé selon la revendication 8, dans lequel le revêtement est discontinu.

11. Procédé selon la revendication 8, dans lequel le revêtement est invisible à l'oeil nu après l'exposition du revêtement au rayonnement actinique.

12. Procédé selon la revendication 8, dans lequel la mesure à la deuxième longueur d'onde a lieu dans la région visible du spectre électromagnétique.

13. Procédé selon la revendication 8, dans lequel les nanoparticules inorganiques fluorescentes comprennent un sulfure métallique, un séléniure métallique, ou un tellurure métallique ou un oxyde métallique dopé avec une terre rare.

14. Procédé selon la revendication 8, dans lequel les nanoparticules inorganiques fluorescentes comprennent un sulfure métallique, un séléniure métallique, ou un tellurure métallique.

15. Article comprenant :
un contenant équipé pour produire une pulvérisation contenant un liquide ;
une composition sous forme de dispersion à l'intérieur du contenant, la composition sous forme de dispersion comprenant
une solution comprenant (a) un solvant non aqueux et (b) un matériau polymère, un précurseur du matériau polymère, ou des combinaisons de ceux-ci ; et
des nanoparticules inorganiques fluorescentes, modifiées en surface, dispersées dans la solution, les nanoparticules inorganiques fluorescentes comprenant un matériau semi-conducteur ou un oxyde métallique dopé avec une terre rare, les nanoparticules inorganiques fluorescentes étant présentes dans une quantité ne dépassant pas 5 % en poids relativement au poids de la composition et les nanoparticules inorganiques fluorescentes ayant une taille moyenne de particule ne dépassant pas 50 nanomètres et émettant un signal de fluorescence à une deuxième longueur d'onde quand elles sont exposées à une première longueur d'onde qui est plus courte que la deuxième longueur d'onde.
